# EUROPEAN PATENT APPLICATION

(11) **EP 1 975 401 A1**
(43) Date of publication of application: **01.10.2008**
(21) Application number: 07006406.8
(22) Date of filing: 28.03.2007
(51) Int. Cl.: F02M 29/06, F02B 27/02

(54) **Variable natural intake tube**

(71) Applicant: Chen, Wang-Chun, Sioushuei Township Chang hua 504 (TW)
(72) Inventor: Chen, Wang-Chun, Sioushuei Township Chang hua 504 (TW)
(74) Representative: Zeitler, Giselher

(57) **Abstract**

A variable natural intake tube includes outwardly expanded tube openings (11,12) formed around two ends of the intake tube symmetrically, a plurality of unidirectionally radially arranged flanges (13) formed around an inner wall (2) of the hollow tube body (1) so that helical slot ways (14) are formed between the flanges (13), and stopper walls (111,121) at two ends of each of the flanges (13) and the slot ways (14) so that sloped cambers (112,122) are formed between the stopper walls (111,121) and edges of the tube openings (11,12). Thus, the engine may get a lot of natural intake to increase the horsepower when it is operating at a high rotating speed. When the engine is operating at a low rotating speed, air turbulence may be generated near the inner wall (2) so that the air intake is decreased, the torsion is increased, and the fuel is saved.

## Description

### BACKGROUND OF THE INVENTION

### (1) FIELD OF THE INVENTION

The invention relates to a variable natural intake tube, and more particularly to an intake tube structure capable of naturally increasing or decreasing air intake according to a rotating speed of an engine according to the design of a tube body so that the torsion and the fuel efficiency are increased.

### (2) DESCRIPTION OF THE PRIOR ART

A typical power mechanical engine is operated mainly by providing fuel in conjunction with the air supply from an intake tube so that the air and the fuel are mixed, ignited and exploded to produce the power for pushing a piston back and forth. The power for enabling the engine to operate is generated through a link device.

However, the typical intake tube is a hollow tube having an inner wall, and two tube openings connected to two ends of the inner wall. One of the tube openings is connected to an air collecting port of the engine through the tube, and the other of the tube openings is connected to an air passage. When the engine is started, the intake tube intakes the air to mix with the fuel so that the power for operating the engine is generated. However, multiple manifolds between the intake tube and the engine often slow down the flowing speed of the air stream so that the air intake supplied to the engine is insufficient with respect to the fuel. This phenomenon becomes obvious when the engine is operating at the high rotating speed.

Thus, it is a motivation of the invention to provide a variable natural intake tube, which can increase the horsepower when the engine is rotating at the high speed and can save the fuel when the engine is rotating at the low speed.

### SUMMARY OF THE INVENTION

The main object of the invention is to provide an intake tube structure capable of increasing the horsepower when an engine is rotating at the high speed and increasing the torsion and saving the fuel when the engine is rotating at the low speed.

To achieve the above-identified object, the invention provides a variable natural intake tube including a hollow tube body, two outwardly expanded tube openings formed around two ends of the tube body symmetrically, a plurality of unidirectionally radially arranged flanges formed around an inner wall of the hollow tube body so that helical slot ways are formed between the flanges, and stopper walls at two ends of each of the flanges and the slot ways so that sloped cambers are formed between the stopper walls and the edges of the tube openings, respectively. Thus, the intake air stream pressure can be automatically adjusted according to the speed of the air stream so that the horsepower is increased at a high speed and the fuel is saved and the torsion is increased at a low speed.

Further aspects, objects, and desirable features of the invention will be better understood from the detailed description and drawings that follow in which various embodiments of the disclosed invention are illustrated by way of examples.

### BRIEF DESCRIPTION OF THE DRAWINGS

FIG. 1 is a schematic illustration showing the exterior of the intake tube according to the embodiment of the invention.
FIG. 2 is a schematic illustration showing a right side of the intake tube according to the embodiment of the invention.
FIG. 3 is a cross-sectional view showing the intake tube according to the embodiment of the invention.
FIG. 4 shows the air stream flowing condition corresponding to the air intake at the high flowing speed according to the invention.
FIG. 5 shows the air stream flowing condition corresponding to the air intake at the low flowing speed according to the invention.

### DETAILED DESCRIPTION OF THE PREFERRED EMBODIMENTS

The contents and the functions of the present invention will be apparent from the following detailed description, which proceeds with reference to the accompanying drawing according to embodiment of the invention.

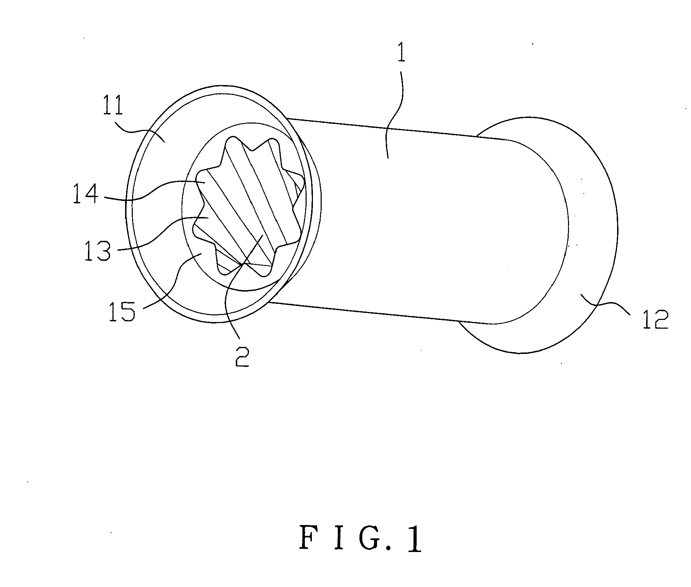

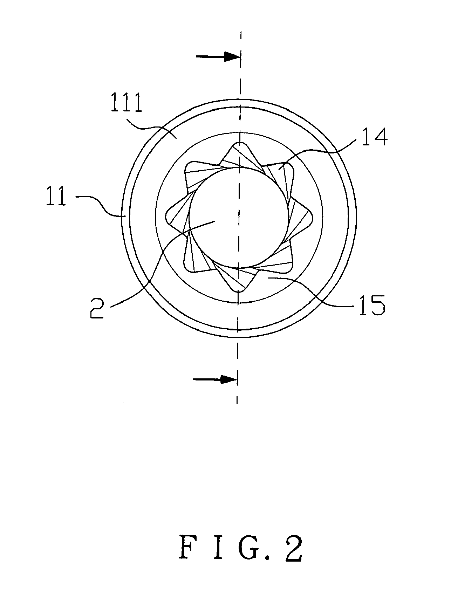

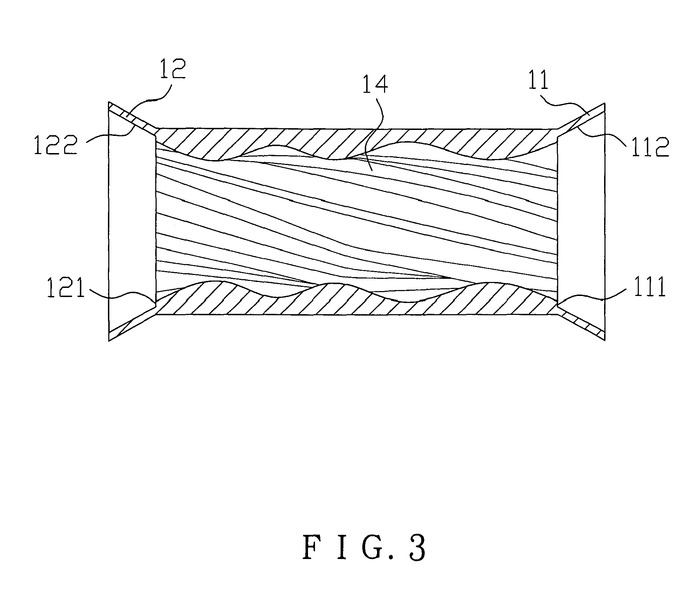

The invention provides a variable natural intake tube, as shown in FIG. 1. The natural intake tube includes a hollow tube body (1), and an outwardly expanded first tube opening (11) and an outwardly expanded second tube opening (12) formed around two ends of the hollow tube body (1) symmetrically. The first and second tube openings (11,12) are to be respectively connected to an inlet port and an engine. The natural intake tube also includes a plurality of unidirectionally radially arranged flanges (13) (see FIGS. 2 and 3) formed around an inner wall (2) of the hollow tube body (1) so that helical slot ways (14) are formed between the flanges (13). The natural intake tube further includes a first stopper wall (111) and a second stopper wall (121) formed at two ends of each of the flanges (13) and the slot ways (14). Sloped cambers (112, 122) are formed between the first and second stopper walls (111, 121) and edges of the first tube opening (11) and the second tube opening (12), respectively.

The flanges (13) between the slot ways (14) are equally spaced apart so that the air stream can be transferred between an engine and an inlet port stably and evenly.

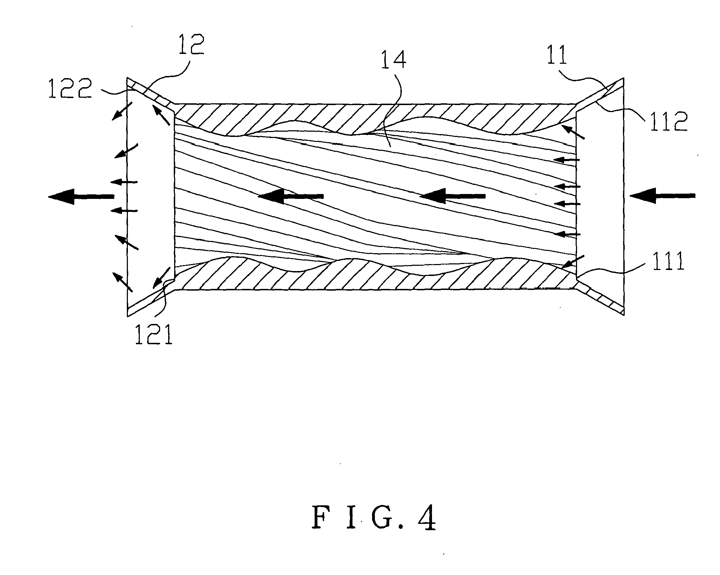

According to the above-mentioned architecture, the input air stream (A) is converged at the first tube opening (11) and enters the center of the hollow tube body (1) and then an output air stream (B) is outputted from the second tube opening (12) directly according to the rifling traveling principle when the engine is rotating at a high speed (see FIGS. 1 and 4). Then, the output air stream (B), which is supercharged by the unidirectionally radially arranged flanges (13) formed around the inner wall (2) of the hollow tube body (1), enters the engine to mix with the fuel so that the horsepower of the engine may be increased when the engine is rotating at the high speed.

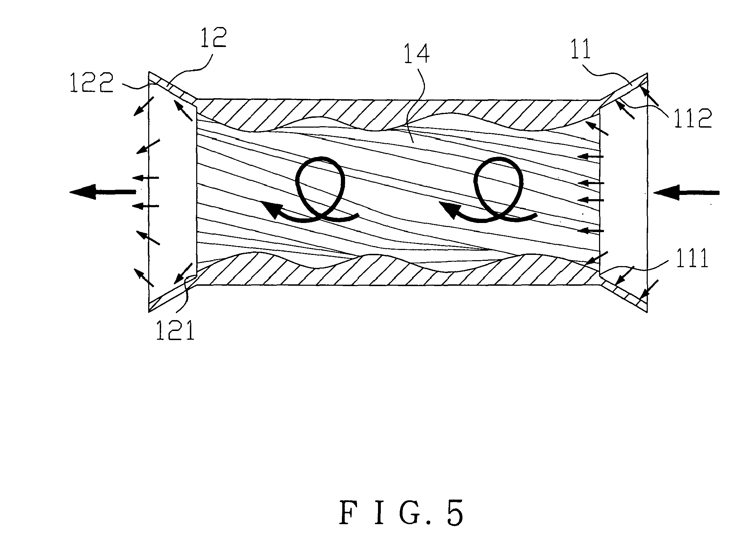

When the engine is rotating at a low speed (see FIGS. 1 and 5), the flowing speed of the air stream is low. Thus, when the input air stream (A) is collected by the sloped camber (112) of the first tube opening (11), the air stream diffuses into the helical slot ways (14) between the flanges (13) on the inner wall (2) of the hollow tube body (1) due to the lagging effect, and is guided to the second tube opening (12) along the helical slot ways (14) to form the output air stream (B). Thus, air turbulence is generated on the inner wall (2) to block the flowing of the air stream so that a fuel supplying sensor (not shown) of the engine senses the reductions in the pressure, the flow quantity and the flowing speed. In this case, the fuel supply is reduced so that the fuel may be saved. In addition, the sloped camber (122) of the second tube opening (12) converges the air stream, which flows into the engine so that the torsion can be increased due to the rich-oil phenomenon (i.e., the fuel/air ratio is greater than a standard value) when the engine is rotating at the low speed. Consequently, the hollow tube body (1) of the invention can automatically adjust the intake air stream pressure according to the flowing speed of the air stream so that the horsepower can be increased when the engine is rotating at the high speed, and the fuel may be saved and the torsion may be increased when the engine is rotating at the low speed. Thus, the invention has the utility and can be used conveniently.

In summary, the invention provides an improved intake tube structure in order to enhance the fuel usage efficiency of the engine. Thus, the horsepower of the engine can be increased when the engine is rotating at the high speed, and the fuel can be saved when the engine is rotted at the low speed so that the object of the invention can be achieved as compared with the prior art.

New characteristics and advantages of the invention covered by this document have been set forth in the foregoing description. It is to be expressly understood, however, that the drawings are for the purpose of illustration only and are not intended as a definition of the limits of the invention. Changes in methods, shapes, structures or devices may be made in details without exceeding the scope of the invention by those who are skilled in the art. The scope of the invention is, of course, defined in the language in which the appended claims are expressed.

## Claims

1. A variable natural intake tube, comprising:
a hollow tube body (1) ;
outwardly expanded tube openings (11,12) formed around two ends of the hollow tube body (1) symmetrically;
a plurality of unidirectionally radially arranged flanges (13) formed around an inner wall (2) of the hollow tube body (1) so that helical slot ways (14) are formed between the flanges (13); and
stopper walls (111,121) formed at two ends of each of the flanges (13) and the slot ways (14) so that sloped cambers (112,122) are formed between the stopper walls(111,121) and edges of the tube openings (11,12), respectively.

2. The variable natural intake tube according to claim 1, wherein the tube openings (11,12) are respectively connected to an inlet port and an engine.

3. The variable natural intake tube according to claim 1, wherein the flanges (13) between the slot ways (14) are equally spaced apart.

4. A variable natural intake tube, comprising:
a hollow tube body (1) ;
outwardly expanded first and second tube openings (11,12) formed around two ends of the hollow tube body (1) symmetrically;
a plurality of unidirectionally radially arranged flanges (13) formed on an inner wall (2) of the hollow tube body (1) so that helical slot ways (14) are formed between the flanges (13); and
first and second stopper walls (111,121) formed at two ends of each of the flanges (13) and the slot ways (14) so that sloped cambers (112,122) are formed between the first and second stopper walls (111,121) and edges of the first and second tube openings (11,12), respectively.

5. The variable natural intake tube according to claim 4, wherein the first tube opening (11) is connected to an inlet port.

6. The variable natural intake tube according to claim 4, wherein the second tube opening (12) is connected to an engine.

7. The variable natural intake tube according to claim 4, wherein the flanges (13) between the slot ways (14) are equally spaced apart.
